# EUROPEAN PATENT APPLICATION

(11) **EP 3 650 112 A1**
(43) Date of publication of application: **13.05.2020**
(21) Application number: 19207850.9
(22) Date of filing: 08.11.2019
(51) Int. Cl.: B01D 65/00, B01D 63/02, B01D 63/10

(54) **DEVICE AND METHOD FOR ASSEMBLY OF A FILTRATION UNIT IN A MEMBRANE FILTRATION APPARATUS**

(30) Priority: 08.11.2018 EP 18205057
(71) Applicant: Tetra Laval Holdings & Finance S.A., 1009 Pully (CH)
(72) Inventor: Lindstrøm, Morten, 7400 Herning (DK); Stenholt, Jan, 8643 Ans by (DK)
(74) Representative: Tetra Pak - Patent Attorneys SE

(57) **Abstract**

A support device (20) is provided to facilitate assembly and/or disassembly of a filtration unit of a membrane filtration apparatus, which may be configured for production of a food product, by supporting a membrane element (12) during the assembly and/or disassembly. The support device (20) comprises an engagement portion (21) which is configured to detachably engage an end portion (11A) of an elongate housing (11) of the filtration unit. The support device (20) further comprises a platform portion (22) that projects from the engagement portion (21) and is configured to support the membrane element (12) during loading and/or unloading of the membrane element (12) through an opening (11C) in the end portion (11A).

## Description

### Technical Field

The invention generally relates to the field of membrane filtration and in particular to assembly of a filtration unit in a membrane filtration apparatus, especially but not exclusively for use in manufacture of food products, such as dairy products and beverages.

### Background Art

Membrane filtration is widely used in process manufacturing and involves a physical separation of an incoming feed into two fractions by use of a membrane. The fraction that passes the membrane is commonly known as "permeate", and the remaining fraction is denoted "retentate". Depending on deployment, either one of the fractions, or both fractions, may be used in manufacture of one or more products.

A membrane filtration apparatus may be seen to include one or more filtration units, each of which is operable to separate an incoming feed into permeate and retentate. Each filtration unit comprises one or more membrane elements which are installed in a housing. The most commonly used membrane elements are of hollow-fiber type or spiral-wound type. In industrial installations, such membrane elements may be configured for installation in elongate housings of tubular configuration.

In industry settings, periodic service and maintenance is imperative to ensure consistent output quality and high availability. To enable service and maintenance, the tubular housings may have an end opening which is covered by a removable end cap. After removal of the end cap, the membrane element or elements in the filtration unit are exposed and may be pulled out through the end opening for inspection, cleaning, exchange, etc. The filtration unit is then reassembled by inserting membrane element(s) into the housing and mounting the end cap to cover the end opening.

The disassembly and reassembly of the filtration units is typically performed manually if the tubular housings are arranged to extend horizontally. However, the filtration units may be of large scale and the membrane elements may be relatively heavy and difficult to handle for service personnel. Further, it is not uncommon that a filtration unit contains two or more membrane elements, which need to be carefully fitted together when they are loaded into the housing, e.g. by use of a respective interconnector, also known in the art as anti-telescopic device (ATD), seal carrier, membrane end cap, or membrane coupler. Thus, reassembly of a filtration unit may be quite difficult and time consuming and may require the cooperation of at least two persons. Nevertheless, there is still a risk of misalignment between membrane elements and a resulting leakage in the membrane filtration apparatus. Such leakage is especially unwanted, and potentially disastrous, in manufacture of substances for human ingestion, such as food products.

Manual handling of heavy objects is often the cause of injuries to the musculoskeletal system. An increased risk of injuries may occur if the weight of the respective membrane element exceeds the recommended weight limit for manual handling and/or if the membrane element is lifted in an uncontrolled body posture that puts excessive strain on the musculoskeletal system. Access for removal and installation of the membrane elements may also require working at heights, which in combination with heavy weights and/or potentially uncontrolled body posture further increases the risk of injuries.

Further, removing membrane elements may sometimes result in a membrane element being dropped to the floor, which may irreparably damage the membrane element and/or the interconnector.

JP2013052316, JP2013052317 and JP2013052318 seek to at least partly overcome these problems by providing a free-standing support structure with a moveable platform for holding a membrane element. The support structure is moveable on the floor space in front of a set of filtration units and the platform is motorized to enable an operator to align a membrane element carried on the platform with the end opening of the housing. The platform further comprises a moveable rod which, when connected to a membrane element, is operable to move the membrane element out of and into the housing. While this prior art solution may overcome many of the problems identified above, the free-standing support structure is bulky and heavy and requires quite a bit of free space in front of the filtration unit. Further, the known support structure is an advanced device with several drive units for translation in x, y, z directions and is likely to be quite costly, with respect to both purchase and maintenance.

### Summary

It is an objective of the invention to at least partly overcome one or more limitations of the prior art.

One such objective is to provide a user friendly, simple and cost-effective technique for assembly of a filtration unit in a membrane filtration apparatus.

One or more of these objectives, as well as further objectives that may appear from the description below, are at least partly achieved by a support device, a method of assembling a filtration unit, and a method of producing a food product according to the independent claims, embodiments thereof being defined by the dependent claims.

A first aspect of the invention is a support device for use with a membrane filtration apparatus comprising an elongate and horizontally arranged membrane housing. The support device is configured to support a membrane element during loading and/or unloading of the membrane element through an opening in an end portion of the membrane housing. The support device comprises an engagement portion which is configured to detachably engage the end portion of the membrane housing, and a platform portion that projects from the engagement portion and is configured to support the membrane element during the loading and/or unloading through the opening.

Alternatively, it may be said that the first aspect of the invention is a support that is arranged to support a membrane element during loading and/or unloading of the membrane element through an opening in an end portion of a membrane housing. The membrane housing may be elongated and horizontally arranged, and forms part of a membrane filtration apparatus. The support device comprises an engagement portion which is configured to detachably engage the end portion of the membrane housing, and a platform portion that projects from the engagement portion and is configured to support the membrane element during the loading and/or unloading through the opening.

All alternatives of the first aspect may comprise the same technical features and embodiments described below.

The support device of the first aspects is a simple and inexpensive implement that may be conveniently attached to the end portion of a membrane housing to provide support for membrane element(s) when loaded and/or unloaded through an opening in this end portion. Since the support device is detachable, it can be simply moved between membrane housings by service personnel for use in loading and/or unloading of membrane elements, irrespective of the available floor space in front of the membrane housings. The support device may be a relatively lightweight and inexpensive implement, which does not require the provision of electric drive units or the like. Instead, by its engagement to the end portion, the support device may be inherently aligned with the opening to facilitate the loading and unloading of the membrane element(s).

By its construction, the support device enables manual loading and/or unloading of two or more membrane elements into a membrane housing, possibly by a single person, at least as long as the single person is capable of lifting the membrane element onto the support device. By proper design of the platform portion, the support device may allow two consecutive membrane elements to be carefully aligned on the platform portion during loading, to thereby avoid stress in the above-mentioned interconnector and minimize the risk of leakages. It is also realized that the support device by its supporting function reduces the risk of injuries, as well as the risk of a membrane element being dropped to the floor.

Embodiments of the first aspect are exemplified in the detailed description. The embodiments may provide the foregoing technical effects as well as one or more additional technical effects, such as ensuring a suitable tradeoff between weight and strength of the support device, improving the usability of the support device, improving the versatility of the support device, improving the safety of the user of the support device, etc.

For example, the platform portion may have a support surface and side walls that extend from opposite sides of the support surface, which have a longitudinal extent and collectively define a longitudinal tray-shaped structure for receiving and supporting a membrane filter. This means that the support device is open along one of its longitudinal sides, such that a membrane filter can be placed in the platform via the open side, on the support surface and between the side walls.

A second aspect of the invention is a system comprising an elongate and horizontally arranged membrane housing and a support device according to the first aspect or any of its embodiments. The horizontally arranged membrane housing may comprise any combination of the features described herein for the membrane housing.

Another aspect of the invention is a system comprising a membrane filtration apparatus having an elongate and horizontally arranged membrane housing and a support device according to the first aspect or any of its embodiments. The membrane filtration apparatus may comprise any combination of the features described herein for the membrane filtration apparatus.

A third aspect of the invention is a method of assembling a filtration unit of a membrane filtration apparatus, wherein the filtration unit comprises an elongate and horizontally arranged membrane housing and one or more membrane elements, and wherein an end portion of the membrane housing defines an opening to a cavity for receiving the one or more membrane elements. The method comprises arranging a support device according to the first aspect, or any of its embodiments, in engagement with the end portion of the membrane housing, placing a membrane element of the one or more membrane elements on the support device, and pushing the membrane element into the cavity through the opening.

In one embodiment, the method further comprises: placing, before pushing the membrane element fully into the cavity, a further membrane element on the support device; installing a connecting element intermediate the membrane element and the further membrane element to fluidly interconnect permeate manifolds of the membrane element and the further membrane element; and pushing the further membrane element and the membrane element into the cavity through the opening.

A fourth aspect of the invention is a method for production of a food product. The method comprises assembling a filtration unit according the method of the third aspect or any of its embodiments, removing the support device, connecting an end cap to the end portion to cover the opening, supplying a stream of a liquid substance to the filtration unit, receiving a retentate and a permeate from the filtration unit, and providing at least one of the retentate and the permeate for production of the food product.

Still other objectives, as well as features, embodiments, aspects and advantages of the invention may appear from the following detailed description as well as from the drawings.

### Brief Description of the Drawings

Embodiments of the invention will now be described, by way of example, with reference to the accompanying schematic drawings.
FIG. 1 is an elevated side view of a membrane filtration apparatus.
FIG. 2 is an elevated side view of a support device when mounted onto a housing and used for loading of a membrane element.
FIGS 3A-3B are perspective views of an embodiment of the support device in FIG. 2.
FIGS 4A-4B are perspective views of the support device in FIGS 3A-3B when attached to a housing, before and during loading of membrane elements, respectively. FIG. 4C is a top plan view corresponding to FIG. 4B, FIG. 4D is a section view along D-D in FIG. 4C, and FIG. 4E is a front view taken in the loading direction in FIG. 4B with the housing omitted.
FIG. 5A is a perspective view of an engagement portion of the support device in FIGS 3A-3B, and FIG. 5B is a perspective view of engagement elements included in engagement portion.
FIGS 6A-6B correspond to FIGS 5A-5B and illustrate a variant of the engagement portion.
FIGS 7A-7B are flow charts of methods enabled by a support device in accordance with embodiments.

### Detailed Description

Embodiments of the present invention will now be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, the term "and/or" includes any and all combinations of one or more of the associated listed items.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

Like reference signs refer to like elements throughout.

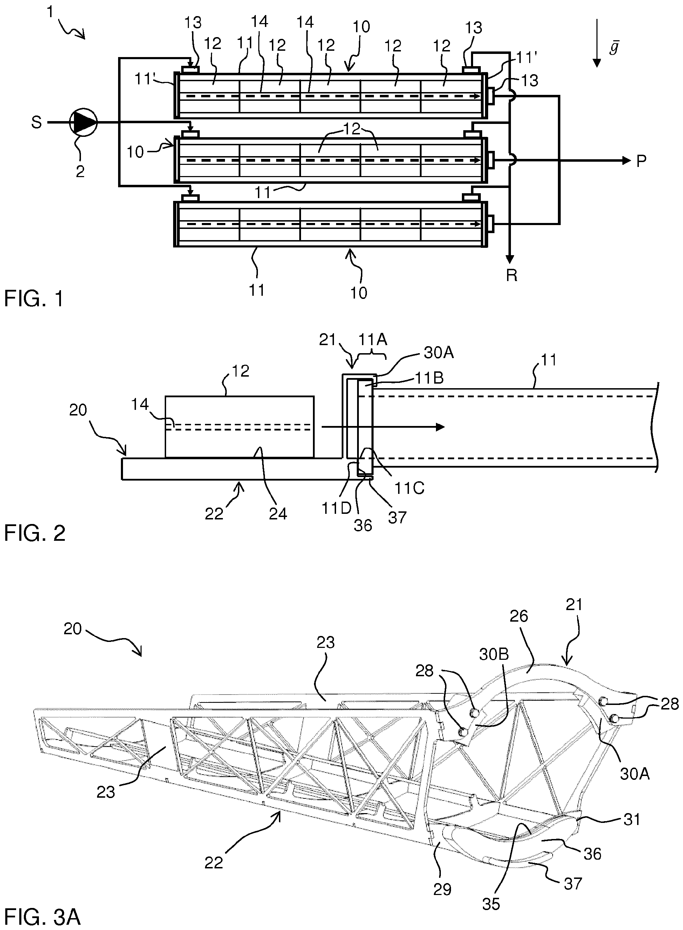

Embodiments of the present invention relate to assembly and disassembly of filtration units of a membrane filtration apparatus. FIG. 1 shows an example of a membrane filtration apparatus 1, which comprises three horizontal filtration units 10 arranged in a vertical stack (as indicated by the direction of gravity *g̅*). For purpose of illustration, some internal parts of the filtration units 10 are shown in FIG. 1. The respective filtration unit 10 comprises an elongate tubular vessel or "membrane housing" 11, which is arranged with is center axis in a horizontal plane. The membrane housing 11 is abbreviated "MH" in the following. A set of membrane elements 12 (five in FIG. 1) are arranged inside the MH 11. The membrane element 12 is also known as "membrane filter" or "membrane module" and is abbreviated "ME" in the following. Each ME 12 defines an internal permeate channel 14 for permeate fluid, and the MEs 12 are arranged inside the MH 11 with their permeate channels 14 in mutual alignment. The MEs 12 are filtration elements and may be of any suitable type, including but not limited to spiral-wound type and hollow-fiber type, which are well-known in the art. Generally, although not shown in FIG. 1, the MEs 12 are fitted together in pairs by a respective connecting element, referred to as "interconnector" in the Background section and abbreviated "IC" in the following, which ensures mutual alignment and interconnection of the permeate channels 14 of adjacent MEs 12, so as to form a composite permeate channel that extends along the filtration unit 10. For spiral-wound MEs, it is common practice for ICs to also be designed to protect the respective ME 12 from telescoping as a result of hydraulic forces pushing on the MEs 11. Conventionally, such an IC may be configured as a spoke wheel with a central hub that defines a permeate channel. The ends of the respective MH 11 are covered by end caps 11'. Ports 13 are defined in the respective MH 11 and in at least one of the end caps 11' for connection to fluid lines, pipes or hoses. It is realized that FIG. 1 is highly schematic and that further conventional components may be included, such as gaskets, spacer tubes, blind adapters, support rings, retaining rings, etc.

In the example of FIG. 1, the filtration units 10 are connected to a supply manifold of supply pipes. A supply pump 2 in the supply manifold is operable to supply a stream of a liquid substance S through ports 13 on the inlet ends ("feed ends") of the filtration units 10. Pumping the liquid substance S across the surface of the MEs 12 creates a positive trans-membrane pressure that forces any components smaller than the porosity of the MEs 12 to pass through, forming a permeate (or filtrate) P which is collected in the composite permeate channel as indicated by dashed arrows in FIG. 1. A permeate manifold is connected to ports 13 in the end caps 11' on the outlet ends of the MHs 11 to receive the permeate P. The remaining fluid forms a retentate (or concentrate) R. A retentate manifold is connected to ports 13 on the outlet ends of the MH 11 to receive the retentate R.

FIG. 2 is a side view of an example support device or support fixture 20 which is mounted onto an end portion 11A of a MH 11, either at the feed end or the outlet end. In the illustrated example, the MH 11 comprises a radial protrusion 11B which may or may not extend around the full perimeter of the MH. In this context, "radial" refers to a direction perpendicular to the elongate extent or axial direction of the MH 11. An opening 11C is defined in the end portion 11A. The support device 20 is configured to support an ME 12 during assembly/disassembly of the filtration unit 10, in particular during loading and/or unloading of the ME 12 through the opening 11C. The dashed lines inside the MH 11 indicate the extent of the internal wall that defines the cavity within the MH 11. In FIG. 2, an ME 12 is arranged on the support element 20 in preparation for insertion into the MH 11 in the direction of the arrow. The dashed lines inside the ME 12 indicate the extent of the permeate channel 14.

The support device 20 comprises an engagement portion 21 which is configured to detachably engage the end portion 11A, and a platform portion 22 that projects from the engagement portion 21 and is configured to support the ME 12 during its loading/unloading into the cavity through the opening 11C. It is realized that loading or insertion of MEs 12 into the MH 11, as well as unloading or extraction of MEs 12 from the MH 11, may be greatly facilitated by the supporting function of device 20. The static load on the user during loading/unloading may be reduced, thereby mitigating the risk of injuries and improving OHS (Occupational Health and Safety) at the workplace. Further, the risk of an ME 12 being dropped to the floor is reduced.

In one embodiment, the support device 20 is configured to align the ME 12 with the opening 10C during the loading and/or unloading. This will further improve the usability of the support device 20 by facilitating insertion/extraction of the respective ME 12. In the example of FIG. 2, the platform 22 is configured to be level with the bottom of opening 11C to ensure a smooth transition from support device 20 to MH 11.

In one embodiment, as exemplified in FIG. 2, the support device 20 is comprising an elongate and essentially horizontal support surface 24 for the ME 12 on the platform portion 22 when the engagement portion 21 is engaged with the end portion 11A. Thereby, the ME 12 will inherently attain the same general extent as the MH 11 when the ME 12 is placed on the platform portion 22. This may improve the usability of the support device 20 by facilitating loading and unloading of MEs 12.

In one embodiment, the support device 20 is configured to form a cantilevered support structure on the MH 11 when the engagement portion 21 is engaged with the end portion 11A. As used herein, "cantilevered" has its ordinary meaning and generally refers to an overhanging or protruding structure without external support. Using other words, "cantilevered" may also refer to a rigid structural element anchored at one end to a vertical support from which it protrudes with an elongated extension from the vertical support.

The support device 20 may form a cantilevered support structure on the membrane housing when the engagement portion 21 is engaged with the end portion 11A, such that the support device 20 has an elongated form that protrudes from the end portion without external support.

It may also be said that the support device 20 forms a cantilevered support structure on the membrane housing when the engagement portion 21 is engaged with the end portion 11A, such that the support device 20 forms a rigid structural element that is anchored at one end to a vertical support in form of the end portion 11A from which the support device 20 protrudes with an elongated extension.

An example of such a cantilevered support structure is shown in FIG. 2. When subjected to a structural load, the platform 22 carries the load to the engagement portion 21, which is thereby forced against the end portion 11A. Such a support device 20 is both simple to handle for service personnel and simple to mount onto the MH 11.

In one embodiment, the support device 20 is configured to be self-supporting when the engagement portion 21 is engaged with the end portion 11A. As used herein, "self-supporting" has its ordinary meaning and implies that the supporting device 20, when the engagement portion 21 has been engaged with the end portion 11A, is capable of performing its supporting function without human assistance. Such an embodiment is exemplified in FIG. 2.

In one embodiment, the engagement portion 21 is configured to be at least partially engaged with the end portion 11A by a tilting force exerted by the platform portion 22 via the engagement portion 21 on the end portion 11A. Such an embodiment is exemplified in FIG. 2, in which an upper part of the engagement portion 21 is engaged with an upper part of the end portion 11A, while an abutment surface 36 at a lower part of the engagement portion 21 is pressed onto a lower part of the end portion 11A by the tilting force caused by the weight of the support device 20. This embodiment has the advantage that the tilting force, and thus the engagement with the end portion 11A, increases with the load on of the platform portion 22. Thus, the support device 20 will inherently be more firmly attached to the MH 11 when carrying one or more MEs 12.

In one embodiment, exemplified in FIG. 2, the engagement portion 21 comprises at least one hook-shaped element 30A which is configured to be arranged onto the radial projection 11B on a top part of the end portion 11A to lock the support device 20 to the MH 11. This embodiment ensures a simple, stable and detachable engagement of the support device 20 to the MH 11, by the gripping action of the hook-shaped element onto the radial projection 11B. As used herein, "top" and "bottom" are defined in relation to the direction of gravity (cf. *g̅* in FIG. 1). Thus, a top part of an object is located above a horizontal symmetry line of the object. Conversely, a bottom part of an object is located below a horizontal symmetry line of the object.

In one embodiment, the engagement portion 21 defines at least one first abutment surface for abutment on a top part of the end portion 11A and at least one abutment surface 36 for abutment on a front surface 11D surrounding the opening 11C in the end portion 11A. This embodiment enables a simple, stable and detachable engagement of the support device 20 to the MH 11. In the example of FIG. 2, a first abutment surface is formed on the inner side of the hook-shaped element 30A. It may be noted, however, that the hook-shaped element 30A may be omitted, e.g. if the end portion 11A is configured without a radial projection 11B. Instead, the first abutment portion may be defined to engage, by friction, the outer contour of the MH 11.

In one embodiment, exemplified in FIG. 2, the engagement portion 21 further comprises a lip 37 which is configured to fit beneath a bottom part of the end portion 11A. The lip 37 may fit snugly beneath the bottom part of the end portion 11A or at least tightly enough to reduce the risk that the support device 20 is dislocated on the end portion 11A or even falls off the end portion 11A when subjected to intermittent forces directed upwards or sideways, e.g. if the user happens to hit or push the support device 20 when placing an ME 12 on the support device 20. Thereby, safety for the user is improved and the risk of MEs 12 being dropped and damaged is reduced.

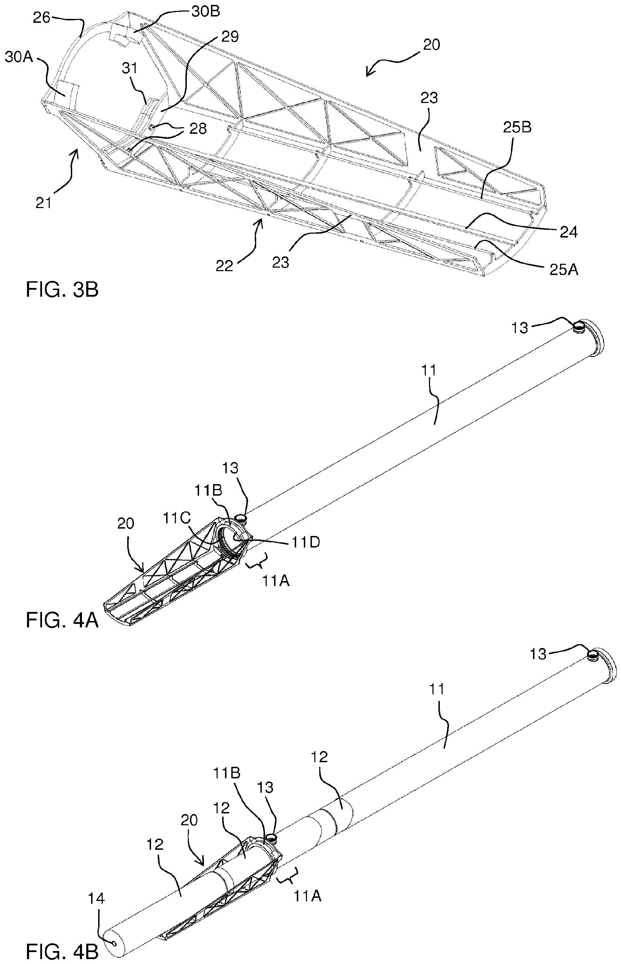

A detailed example of a support device 20 will now be described with reference to FIGS 3-5. The support device 20 in FIGS 3-5 implements all of the embodiments described above with reference to FIG. 2. In the detailed example, the support device 20 comprises a framework structure, which at least partly defines the platform portion 22 and is configured to reduce the weight of the support device 20 without sacrificing strength and durability. The framework may be made of metal or composite. As seen, e.g. in the perspective views of FIGS 3A-3B, the support device 20 is tray-shaped. This feature is implemented to improve the safety of the user by effectively preventing the membrane filter 12 from falling off the support device 20 in a sideways direction. Specifically, the platform 22 comprises a bottom support surface 24 and upright side walls 23, which have a longitudinal extent and collectively define a longitudinal tray-shaped structure for receiving the membrane filters 12.

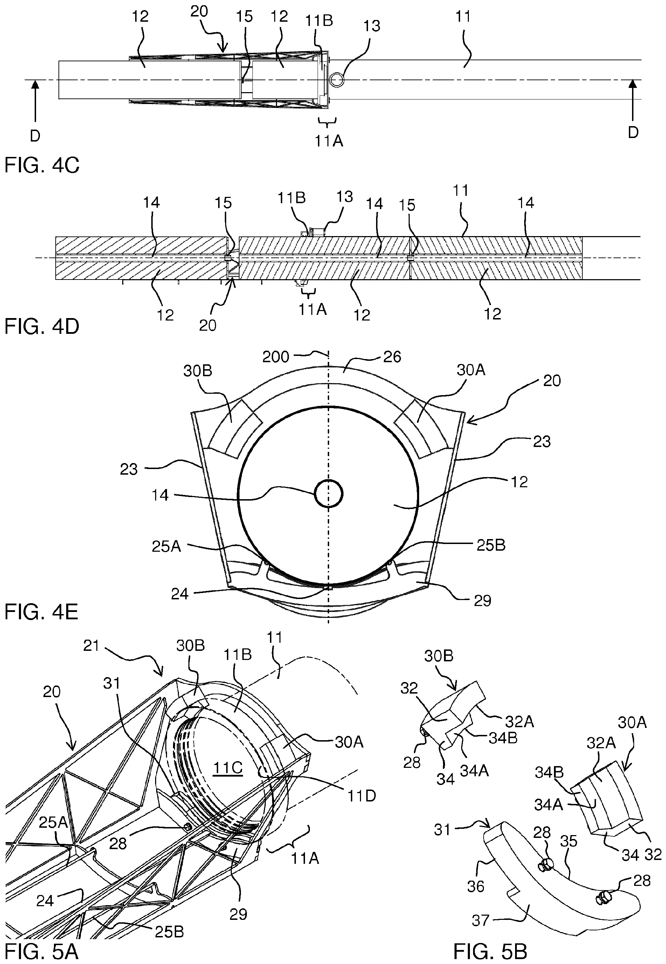

The engagement portion 21 comprises an upper crossbar 26 and a lower crossbar 29 which are joined to the framework structure to define a mounting opening large enough to be arranged over the end portion 11A of the MH 11, e.g. as shown in FIGS 4A-4B. The upper crossbar 26 has two hook-shaped elements 30A, 30B which are symmetrically arranged on opposing sides of a vertical center line 200 of the frame structure, as shown in FIG. 4E. This arrangement of elements 30A, 30B may improve the stability of the support device 20 when engaged with the end portion 11A. However, it is conceivable to replace the two elements 30A, 30B by a single hook-shaped element, e.g. arranged on the vertical center line 200 at the top of the supporting device 20. Alternatively, the supporting device 20 may include more than two hook-shaped elements. The hook-shaped elements 30A, 30B are shaped to mate with the radial projection 11B (a circumferential flange in the illustrated example), and thereby lock the support device 20 to the MH 11. The hook-shaped elements 30A, 30B are formed by a respective block or fitting which is removably attached to the crossbar 26 by fasteners 28, shown as bolts although any type of fastener may be used, such as screws, nuts, snap fittings, rivets, etc. To improve the strength of the bond between block 30A, 30B and crossbar 26, the blocks 30A, 30B are arranged on the side of the crossbar 26 that faces the platform portion 22. This will limit stresses in the interface between the respective block 30A, 30B and the crossbar 26. The lower crossbar 29 has a spacer element or spacer 31, which is arranged to face away from the platform portion 22 and to define an engagement surface 26 for abutment on the lower part of the end portion 11A. Specifically, the spacer 31 is configured to abut on the front surface 11D that surrounds the opening 11C in the end portion 11A (cf. FIG. 5A). The spacer 31 is further shaped in conformity with the opening 11C and arranged to provide a guiding surface 35 for the ME 12 (cf. FIGS 3A, 4E and 5A). Thereby, the provision of the spacer 31 serves to smoothly guide the ME 12 through the opening 11C. Further, the thickness of the spacer 31 is defined such that the platform portion 22 extends essentially parallel to the axial direction of the MH 11 when the support device 20 is mounted onto the end portion 11A. As seen in FIGS 3A-3B, the spacer 31 also comprises the above-mentioned lip 37 which is shaped in conformity with the peripheral surface of the flange 11B. In the illustrated example, the spacer 31 is formed by a block or fitting which is removably attached to the crossbar 28 by fasteners 28.

By providing the respective block 30A, 30B and/or the spacer 31 as a removable engagement element in the support device 20, it is possible to adapt one and the same support device 20 to different profiles and dimensions of the end portions 11A of the MH 11, and thereby improve the versatility of the support device 20. The provision of one or more removable engagement elements 30A, 30B, 31 also makes it possible to use a different material in these elements compared to the frame structure, e.g. to improve durability, increase friction, etc.

An example configuration of the blocks 30A, 30B and the spacer 31 is shown in greater detail in the perspective view of FIG. 5B. The respective block 30A, 30B comprises a base portion 32 which is configured to be arranged radially outside of the flange 11B and defines an abutment surface 32A which is arranged for abutment on the peripheral surface of the flange 11B and is shaped in conformity therewith. The respective block 30A, 30B further comprises a ledge portion 34, which extends approximately at right angles from the base portion 32 to form a hook-shaped portion. The ledge portion 34 defines an abutment surface 34A which is arranged for abutment on the rear surface of the flange 11B, i.e. the flange surface opposite to the front surface 11D. The ledge portion 34 further defines an end surface 34B which is arranged to face the outer wall of the MH 11 behind the flange 11B. The end surface 34B may be shaped in conformity with the outer wall of the MH 11, as shown in FIG. 5B, and may or may not abut on the outer wall when the support structure 20 is engaged with the MH 11.

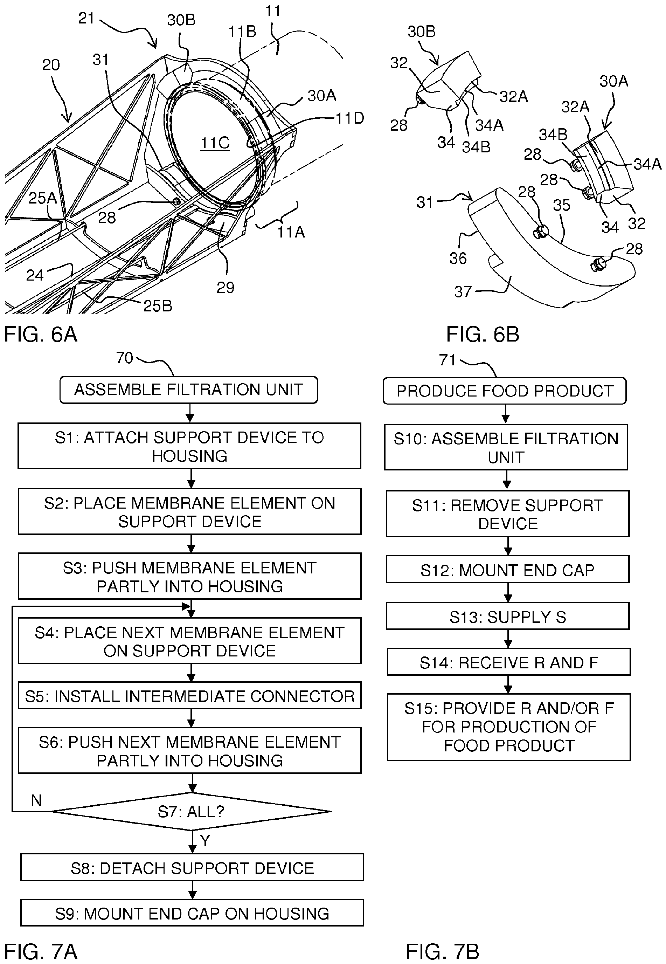

An alternative configuration of the blocks 30A, 30B and the spacer 31 is shown in greater detail in the perspective view of FIGS 6A-6B. Compared to FIGS 5A-5B, the blocks 30A, 30B and the spacer 31 have been adapted for engagement with an MH 11 that has different profile on its end portion 11A, *viz.* a different type of flange 11B. Specifically, the flange 11B is provided with a further radially protruding and circumferential rim, and the blocks 30A-30B form a respective hook-shaped portion for arrangement onto and engagement with the protruding rim of flange 11B. Like in FIGS 5A-5B, the respective block 30A, 30B comprises a base portion 32 and a ledge portion 34, where the base portion defines an abutment surface 32A and the ledge portion defines an abutment surface 34A and an end surface 34B. While the dimensions differ between the blocks 30A, 30B in FIGS 5A-5B and FIGS 6A-6B, the overall structure and function are the same and will not be described in further detail. Likewise, while there are differences in dimensions between the spacers 31 in FIGS 5A-5B and FIGS 6A-6B, the overall structure and function are the same.

FIG. 4E is a front view of the support device 20 when it is attached to the end portion 11A of the MH 11 and carries an ME 12. For clarity of presentation, the MH and its end portion have been removed from view. As seen, the ME 12 rests on the bottom support element 24 included in the platform portion 22. The support element 24 is arranged on the vertical center line 200. In the illustrated example, the support element 24 is an elongate contiguous rib or rail that extends along the full extent of the platform portion 22 (cf. FIGS 3A-3B). In a variant, the extent of the support element 24 is less than the full extent of the platform portion 22. It also conceivable that the rib is replaced for a sequence of shorter support elements 24 are arranged along the platform portion 22. As seen in FIG. 4E, the sideways position of the ME 12 is defined by two lateral guiding elements 25A, 25B which are arranged on opposing sides of the bottom support element 24 for engagement with a respective side portion of the ME 12. The guiding elements 25A, 25B may, but need not, be symmetrically arranged with respect to the vertical center line 200. In the illustrated example, the guiding elements 25A, 25B are elongate contiguous ribs or rods that extend along the platform portion 22 (cf. FIGS 3A-3B). In a variant, the respective guiding element 25A, 25B may be implemented by a sequence of shorter ribs or rods that are arranged to extend along the platform portion 22. As seen in FIG. 5A, guiding element 25A, 25B are terminated at a respective location spaced from the engagement portion 21, so as to leave the bottom of the platform portion 22 is free of guiding elements 25A, 25B proximate to the engagement portion 21. This done to increase the space available for the user to manually adjust the arrangement of the ME 12 on the platform 22.

FIG. 7A is a flow chart of a method 70 of assembling a filtration unit 10, e.g. of the type shown in FIG. 1, in accordance with an embodiment. Depending on implementation, the assembling may be made from the feed end or the outlet end of the filtration unit 10. The method 70 presumes that the relevant end cap 11' has been removed to expose an open end of the MH 11, and that the MH 11 is free of MEs 12. The method 70 may be performed manually by one or more users, e.g. service personnel or manufacturing personnel. In step S1, a support device 20 is attached to the end portion 11A at the open end of the MH 11. An example of a support device 20 as attached to an elongate and horizontally arranged MH 11 is shown in FIG. 4A. In step S2, a first ME 12 is lifted and placed on the support device 20, whereby the ME 12 is preferably inherently aligned with the opening 11C in the end portion 11A. In step S3, the ME 12 is partly pushed through the opening 11C into the MH 11. For example, the first ME 12 may be pushed approximately 1/3-3/4 of its length into the MH 11. In step S4, a second ME 12 is lifted and placed on the support device 20 with a spacing to the first ME 12. In step S5, an IC is installed to connect the permeate channels 14 of the first and second MEs 12. Alternatively, the IC may be installed on the first or second ME 12 before the second ME 12 is placed on the support device 20. In step S6, similarly to step S3, the second ME 12 is partly pushed into the MH 11, thereby pushing the first ME 12 fully into the MH. As indicated by step S7, steps S4-S6 are then repeated for each ME 12 to be installed in the MH 11. In step S8, the support device 20 is detached from the MH 11. In the illustrated embodiments, removal of the support device 20 involves tilting the device 20 upwards to pivot on the element(s) 30A, 30B before lifting the device 20 off the end portion 11A. Finally, in step S9, the end cap 11' is connected to the end portion 11A to cover the end opening 11C. The skilled person readily understands that the assembly method 70 may include further steps in accordance with conventional practice, such as applying lubricant, attaching gaskets, installing a blind adapter, spacer tube, support rings, retaining rings, etc.

FIGS 4B-4D are different snapshot views of the combination of support device 20 and MH 11 in FIG. 4A during the assembly method 70. At the illustrated time point, the second ME 12 has been partly pushed into the MH 11, as seen at a cut away portion of the MH 11 in FIG. 4B and in the section view of FIG. 4D. A third ME 12 has been placed on the support device 20. An IC 15 has been attached to the front end of the third ME 12, as seen in FIGS 4C-4D. The snapshot views in FIGS 4B-4D are thus taken during step S5. The section view of FIG. 4D also shows how an IC 15 has been installed between the adjacent ends of the first and second MEs 12.

The skilled person readily understands that the support device 20 may be used in corresponding manner during disassembly, to enable safe and controlled withdrawal of one or more MEs 12 from an MH 11.

The skilled person further realizes that the support device 20 provides support and alignment of ME(s) 11 and thereby enables safer working conditions for the personnel involved in installation or replacement of ME(s) 11. Also, the installation or replacement of ME(s) is less physically demanding for the personnel and may even be handled by a single person. Further, when plural MEs 11 are to be installed or replaced, the support device 20 maintains proper alignment between consecutive MEs 11, thereby reducing the risk of faulty installations of ICs 15 or breakage of the same, and associated leakages in the filtration unit 10 and downtime of the membrane filtration apparatus 1.

The support device 20 may be particularly advantageous for use in installation and maintenance of a membrane filtration apparatus 1 in a plant for manufacture of products for human ingestion. Such products include food products, e.g. beverages, such as fruit juices, wines, beers, sodas, as well as dairy products, sauces, oils, creams, custards, soups, etc. A leakage in a membrane filtration apparatus may make the food product inedible or even harmful to health.

FIG. 7B is a flow chart of a method 71 of producing a food product in accordance with an embodiment. In step S10, a filtration unit 10 of a membrane filtration apparatus 1 is assembled, e.g. in accordance with steps S1-S7 in FIG. 7A. In step S11, which corresponds to step S8 in FIG. 7A, the support device 20 is detached from the MH 11 of the filtration unit 10. In step S12, which corresponds to step S8, the end cap 11' is attached to the MH 11. Although not shown in FIG. 7B, steps S10-S12 may be repeated for further filtration units 10 in the membrane filtration apparatus 1, and each filtration unit 10 is connected to the supply, permeate and retentate manifolds of the apparatus 1 (cf. FIG. 1). Then, in step S13, the apparatus 1 is operated to supply a stream of a liquid substance S to be filtered to the feed end of the filtration unit(s) 10, e.g. by activating a supply pump (cf. 2 in FIG. 1). In step S14, retentate R and permeate P are separately received at the outlet end of the filtration unit(s) 10. In step S14, at least one of the retentate R and the permeate P is provided to a downstream processing system for producing the food product.

## Claims

1. A support device for use with a membrane filtration apparatus (1) comprising an elongate membrane housing (11), said support device being configured to support a membrane element (12) during loading and/or unloading of the membrane element (12) through an opening (11C) in an end portion (11A) of the membrane housing (11), said support device comprising:
an engagement portion (21) which is configured to detachably engage the end portion (11A) of the membrane housing (11); and
a platform portion (22) that projects from the engagement portion (21) and is configured to support the membrane element (12) during said loading and/or unloading through the opening (11C).

2. The support device of any preceding claim, which is configured to align the membrane element (12) with the opening (10C) during said loading and/or unloading.

3. The support device of claim 1 or 2, comprising an elongate support surface (24) for the membrane element (12) on the platform portion (22) when the engagement portion (21) is engaged with the end portion (11A).

4. The support device of any preceding claim, which is configured to form a cantilevered support structure on the membrane housing (11) when the engagement portion (21) is engaged with the end portion (11A).

5. The support device of any preceding claim, which forms a self-supporting structure when the engagement portion (21) is engaged with the end portion (11A).

6. The support device of any preceding claim, wherein the engagement portion (21) is configured to be at least partially engaged with the end portion (11A) by a tilting force exerted by the platform portion (22) via the engagement portion (21) on the end portion (11A).

7. The support device of any preceding claim, wherein the engagement portion (21) defines at least one first abutment surface (32A, 32B, 34A) for abutment on a top side of the end portion (11A) and at least one abutment surface (36) for abutment on a front surface (11D) surrounding the opening (11C) in the end portion (11A).

8. The support device of any preceding claim, wherein the engagement portion (21) comprises at least one hook-shaped element (30A, 30B) which is configured to be arranged onto a radial projection (11B) on a top part of the end portion (11A) to lock the support device to the membrane housing (11).

9. The support device of any preceding claim, wherein the engagement portion (21) further comprises a lip (37) which is configured to fit beneath a bottom part of the end portion (11A).

10. The support device of any preceding claim, wherein the engagement portion (21) comprises at least one engagement element (30A, 30B, 31), which is removably included in the support device and configured to engage the end portion (11A) of the membrane housing (11).

11. The support device of claim 10, wherein said at least one engagement element (30A, 30B, 31) comprises a hook-shaped portion (32) which is configured to be arranged onto a radial projection (11B) on a top part of the end portion (11A) to lock the support device to the membrane housing (11).

12. The support device of claim 10 or 11, wherein said at least one engagement element (30A, 30B, 31) comprises a spacer element (31) which is configured to abut on a front surface (11D) surrounding the opening (11C) in the end portion (11A) in alignment with the opening (11C), wherein the spacer element (31) is arranged to provide a guiding surface (35) for the membrane element (12) during said loading and/or unloading.

13. The support device of any preceding claim, wherein the platform portion (22) comprises a bottom support element (24) for engagement, during said loading and/or unloading, with a bottom portion of the membrane element (12), and first and second lateral guiding elements (25A, 25B) which are arranged on opposing sides of the bottom support element (24) for engagement, during said loading and/or unloading, with a respective side portion of the membrane element (12).

14. A method of assembling a filtration unit (10) of a membrane filtration apparatus (1), wherein the filtration unit (10) comprises an elongate and horizontally arranged membrane housing (11) and one or more membrane elements (12), an end portion (11A) of the membrane housing (11) defining an opening (11C) to a cavity for receiving the one or more membrane elements (12), said method comprising:
arranging a support device (20) according to any one of claims 1-15 in engagement with the end portion (11A) of the membrane housing (11);
placing a membrane element (12) of the one or more membrane elements on the support device (20); and
pushing the membrane element (12) into the cavity through the opening (11C).

15. A method for production of a food product, comprising:
assembling a filtration unit (10) according to the method of claim 14,
removing the support device (20);
connecting an end cap (11') to the end portion (11A) to cover the opening (11C);
supplying a stream of a liquid substance (S) to the filtration unit (10);
receiving a retentate (R) and a permeate (P) from the filtration unit (10); and
providing at least one of the retentate (R) and the permeate (P) for production of the food product.
